# EUROPÄISCHE PATENTSCHRIFT

(11) **EP 0 430 979 B1**
(45) Veröffentlichungstag und Bekanntmachung des Hinweises auf die Patenterteilung: **10.03.1993**
(21) Anmeldenummer: 89908968.4
(22) Anmeldetag: 09.08.1989
(51) Int. Cl.: G01F 1/68

(54) **EINRICHTUNG ZUR MESSUNG EINER STRÖMENDEN LUFTMENGE**
DEVICE FOR MEASURING A FLOWING AIR VOLUME
DISPOSITIF DE MESURE D'UN VOLUME D'AIR EN ECOULEMENT

(30) Priorität: 29.08.1988 DE 3829194
(43) Veröffentlichungstag der Anmeldung: 12.06.1991
(73) Patentinhaber: ROBERT BOSCH GMBH, 70442 Stuttgart (DE)
(72) Erfinder: STECHER, Günther, D-7140 Ludwigsburg (DE); HECHT, Hans, D-7015 Korntal (DE); BERGFRIED, Dietrich, D-7031 Böblingen (DE); ZIEGENBEIN, Botho, D-6901 Neckarsteinach (DE); MÜHLHEIM, Richard, D-7400 Tübingen (DE)
(86) Internationale Anmeldenummer: DE8900524
(87) Internationale Veröffentlichungsnummer: WO9002317

(56) Entgegenhaltungen:
- EP-A- 0 235 360
- EP-A- 0 271 660
- US-A- 4 264 961
- US-A- 4 382 247
- US-A- 4 624 138

## Beschreibung

### Stand der Technik

Die Erfindung betrifft eine Einrichtung zur Messung einer strömenden Luftmenge nach den Oberbegriff des Hauptanspruchs (siehe z.B. EP-A-0 271 660).

Aus dem SAE-Technical-Paper-Series 88 05 60, Seiten 105 - 109, ist bereits eine Einrichtung zur Messung einer strömenden Luftmenge nach der Gattung des Hauptanspruchs bekannt, bei der der Heizschichtwiderstand auf der einen Seite des isolierenden Substrats und der zur Erfassung der Temperatur des Heizschichtwiderstandes dienende Sensorschichtwiderstand auf der anderen Seite des isolierenden Substrats, dem Heizschichtwiderstand gegenüberliegend, angeordnet ist, wobei diese beiden Widerstände flächenhaft auf die ebene Oberfläche des isolierenden Substrats aufgebracht sind. Weil das isolierende Substrat aber aus Stabilitätsgründen eine bestimmte Mindestdicke nicht unterschreiten darf, bedeutet ein derartiger Aufbau, daß die thermische Kopplung zwischen den beiden genannten Widerständen über das dazwischenliegende isolierende Substrat nicht ausreichend sein kann. Einmal findet der Wärmeübergang durch das isolierende Substrat hindurch nicht schnell genug statt, zum anderen wird ein Teil der im Heizschichtwiderstand entstehenden Verlustwärme im isolierenden Substrat parallel zur Substratoberfläche seitlich abgeführt, so daß die Temperaturerfassung mit Hilfe des Sensorschichtwiderstandes ungenau und träge ist.

Aus der US-PS 43 82 247 ist des weiteren eine Druckmeßdose bekannt, die eine druckempfindliche Membran enthält, die aus einer aus Glaskeramik bestehenden Blase besteht, die auf einem isolierenden Substrat in Dickschichttechnik hergestellt ist.

### Vorteile der Erfindung

Die erfindungsgemäße Einrichtung zur Messung einer strömenden Luftmenge mit den kennzeichnenden Merkmalen des Hauptanspruchs hat gegenüber der eingangs beschriebenen bekannten Einrichtung zur Messung einer strömenden Luftmenge den Vorteil, daß der Sensorschichtwiderstand und der Heizschichtwiderstand von dem isolierenden Substrat und von den darauf gegebenenfalls aufgebrachten weiteren Komponenten thermisch sehr gut abgekoppelt werden und daß die gegenseitige thermische Kopplung zwischen dem Sensorschichtwiderstand und dem Heizschichtwiderstand erheblich verbessert wird. Dadurch werden kurze Ansprechzeiten erreicht. Aus dem Anspruch 3 ergibt sich der Vorteil einer sehr guten thermischen Abkopplung des weiteren Sensorschichtwiderstandes von dem isolierenden Substrat und einer sehr guten thermischen Kopplung dieses Widerstandes mit der vorbeiströmenden Luft, deren Temperatur durch diesen Widerstand gemessen werden soll. Weitere Vorteile ergeben sich aus den weiteren Ansprüchen 2 und 4 bis 8 und aus der Beschreibung.

### Zeichnung

Anhand der Zeichnung wird die Erfindung näher erläutert. Es zeigen:
Figur 1 das elektrische Schaltbild eines bekannten und des erfindungsgemäßen Luftmassendurchflußmessers,
Figur 2 einen Luftmassendurchflußmesser nach der Erfindung, teilweise im Schaltbild, teilweise in der schematisch gezeichneten Draufsicht auf ein in Dickschichttechnik ausgeführtes Sensorelement,
Figur 3 einen Schnitt nach der Linie III - III der Figur 2,
Figur 4 einen Schnitt nach der Linie IV - IV der Figur 2,
Figur 5 einen Luftmassendurchflußmesser nach der Erfindung zur Messung der angesaugten Luftmenge im Saugrohr eines Kraftfahrzeuges, schematisch.

### Beschreibung der Erfindung

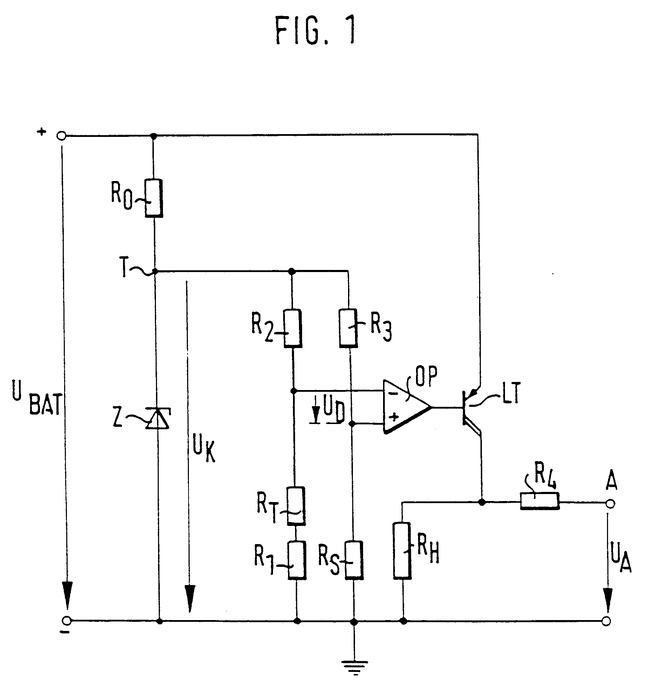

Der in Figur 1 in seinem elektrischen Schaltbild dargestellte erfindungsgemäße Luftmassendurchflußmesser enthält eine Brückenschaltung, die in an sich bekannter Weise mit einem extern angeordneten, mit einem der Brückenwiderstände thermisch gekoppelten Heizschichtwiderstand R_{H} derart zusammenarbeitet, daß der durch den Heizschichtwiderstand fließende Heizstrom ein Maß für die vorbeiströmende Luftmenge ist.

An die Spannung U_{BAT} einer Kraftfahrzeugbatterie ist ein aus einem Widerstand R₀ und einer Zenerdiode Z bestehender Spannungsteiler angeschlossen, wobei der Minuspol der Batterie und die Anode der Zenerdiode gleichzeitig an Masse angeschlossen sind. Zwischen dem Abgriff T des Spannungsteilers R₀, Z und Masse wird eine weitgehend konstante Spannung U_{K} bereitgestellt. An die Spannung U_{K} ist ein aus den Widerständen R₂, R_{T} und R₁ bestehender erster Brückenzweig einer Brückenschaltung angeschlossen, dem ein aus den Widerständen R₃ und R_{S} bestehender zweiter Brückenzweig parallelgeschaltet ist. Der Verbindungspunkt zwischen den Widerständen R₂ und R_{T} ist an den invertierenden Eingang, der Verbindungspunkt zwischen den Widerständen R₃ und R_{S} an den nicht invertierenden Eingang eines Operationsverstärkers OP gelegt, dessen Ausgang an die Basis eines Leistungstransistors LT angeschlossen ist. Der Emitter des Leistungstransistors LT liegt an der Plusklemme der Batterie. Der Kollektor des Leistungstransistors LT ist über den Heizschichtwiderstand R_{H} an Masse angeschlossen, wobei der Heizschichtwiderstand R_{H} mit einem Sensorschichtwiderstand R_{S}, der Bestandteil der Brückenschaltung ist, thermisch gekoppelt ist. Der Kollektor des Leistungstransistors LT ist des weiteren über einen Widerstand R₄ an die Ausgangsklemme A des Luftmassendurchflußmessers angeschlossen. Die zwischen der Klemme A und Masse abgenommene Ausgangsspannung U_{A} des Luftmassendurchflußmessers ist ein Maß für die zu messende Menge der vorbeiströmenden Luft.

Die Wirkungsweise der Schaltungsanordnung nach Figur 1 ist im einzelnen folgende:
Im stationären Zustand ist die Widerstandsbrücke R₁, R_{T}, R₂, R₃, R_{S} so abgestimmt, daß am Operationsverstärker OP nur eine sehr kleine Differenzspannung U_{D} anliegt. Diese steuert über den Operationsverstärker OP den Leistungstransistor LT, der den Strom für den Heizschichtwiderstand R_{H} im stationären Zustand begrenzt. Der Heizschichtwiderstand R_{H} und somit auch der Sensorschichtwiderstand R_{S} haben in jedem Betriebszustand (bei beliebiger Durchflußmenge) annähernd die gleiche Temperatur und damit auch einen bestimmten Widerstandswert.

Bei einer Änderung der Durchflußmenge der störmenden Luft ändern sich die Kühlungsverhältnisse für Heizschichtwiderstand und Sensorschichtwiderstand. Wird beispielsweise die Luftmasse erhöht, dann werden beide Widerstände R_{H} und R_{S} stärker gekühlt. Der Widerstand R_{S} bekommt dadurch einen höheren Widerstandswert, der die Brücke verstimmt. Die dadurch erhöhte Differenzspannung U_{D} führt über den Operationsverstärker OP und den Leistungstransistor LT zu einem erhöhten Strom durch den Heizschichtwiderstand R_{H}, der sich so lange aufheizt, bis beide Widerstände R_{H} und R_{S} wieder ihre Ausgangstemperatur erreicht haben und die Brücke wieder nahezu abgeglichen ist.

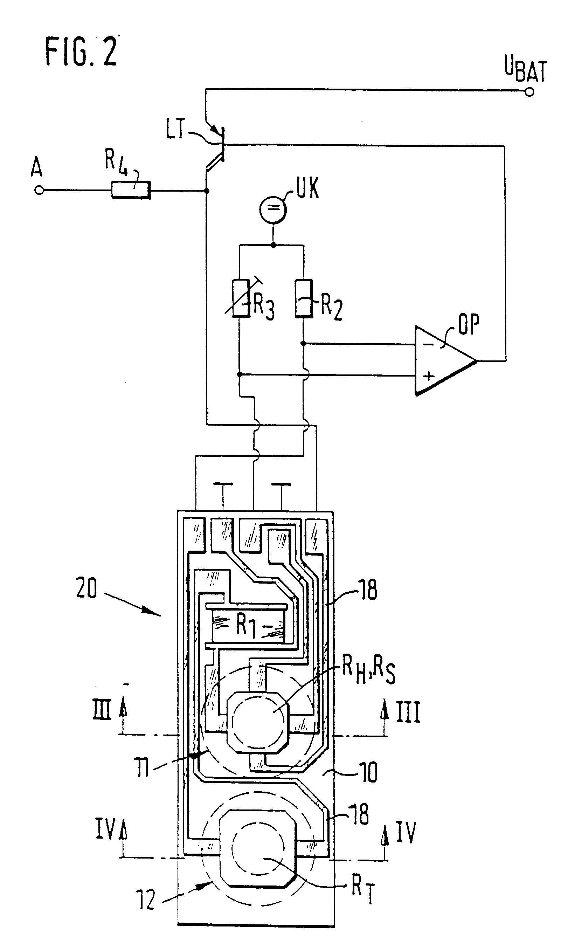

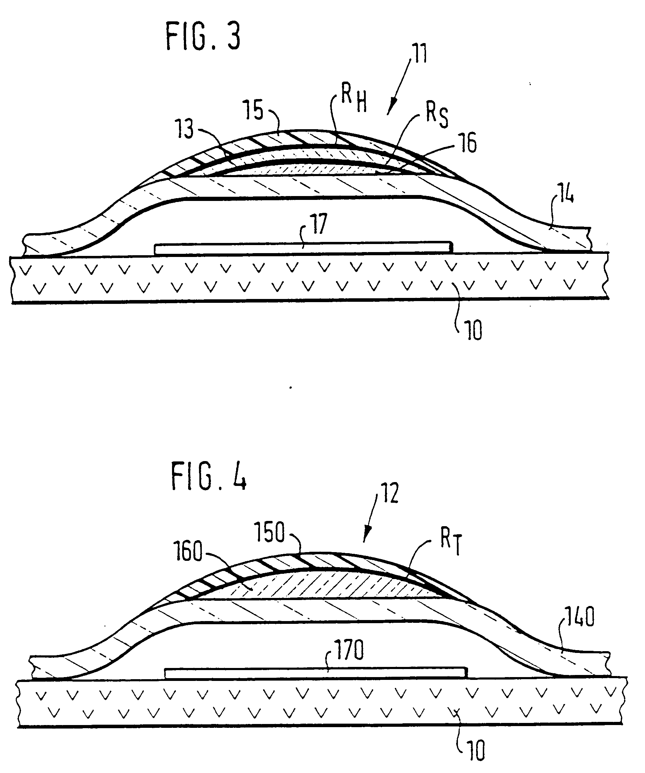

Bei dem in Figur 2 dargestellten Ausführungsbeispiel eines erfindungsgemäßen Luftmassendurchflußmessers sind die Widerstände R₁, R_{H}, R_{S} und R_{T} aus Figur 1 auf einem Keramiksubstrat 10 (Figur 3) in Dickschichttechnik integriert und bilden zusammen mit dem Substrat 10 das der strömenden Luft ausgesetzte Sensorelement.

Der Widerstand R₁ ist in üblicher Dickschichttechnologie ebenflächig auf das Keramiksubstrat 10 aufgebracht.

Die ebenfalls in Dickschichttechnologie hergestellten Widerstände R_{H} und R_{S} sind dagegen gut wärmeleitend, aber elektrisch gegeneinander isoliert, in einer Dickschichtblase 11 untergebracht, die auf dem Keramiksubstrat 10 oberhalb eines auf diesem angeordneten Podests 17 (Figur 3) aufgewölbt ist und in Figur 2 mit gestricheltem Linienzug angedeutet ist.

Der zur Erfassung der Temperatur der strömenden Luftmenge dienende weitere Sensorschichtwiderstand R_{T} ist in ähnlicher Weise wie die beiden Widerstände R_{H} und R_{S} in einer weiteren Dickschichtblase 12 untergebracht, die in Figur 2 ebenfalls mit gestricheltem Linienzug angedeutet ist.

Figur 3 zeigt einen Schnitt nach der Linie III - III der Figur 2. Wie aus Figur 3 erkennbar, sind in der Dickschichtblase 11 die beiden Schichtwiderstände R_{H} und R_{S} durch eine Zwischenschicht 13 aus Glas voneinander getrennt. Die Zwischenschicht 13 isoliert die beiden Schichtwiderstände R_{H} und R_{S} elektrisch gegeneinander, ist aber andererseits gut wärmeleitend ausgeführt, so daß die im Widerstand R_{H} erzeugte Verlustwärme leicht auf den Sensorschichtwiderstand R_{S} übertreten kann.

Die Membran 14 der Blase 11 ist in Dickschichttechnik hergestellt und durch Einlagerung von Glas verstärkt. Auf der Membran 14 ist das aus dem Heizschichtwiderstand R_{H}, der Zwischenschicht 13 und dem Sensorschichtwiderstand R_{S} bestehende Schichtsystem angeordnet, wobei der Sensorschichtwiderstand R_{S} zwischen der Membran 14 und dem Heizschichtwiderstand R_{H} liegt. Auf den Heizschichtwiderstand R_{H} ist eine Schutzschicht 15 aufgebracht. Zwischen dem Sensorschichtwiderstand R_{S} und der Membran 14 ist eine aus Glas bestehende Zwischenschicht 16 angeordnet.

Abweichend von der in Figur 3 dargestellten Anordnung können auch die beiden Schichtwiderstände R_{H} und R_{S} in ihrer Lage vertauscht, d. h. der Heizschichtwiderstand R_{H} zwischen der Membran 14 und dem Sensorschichtwiderstand R_{S} angeordnet sein.

Figur 4 zeigt einen Schnitt nach der Linie IV - IV der Figur 2. Aus Figur 4 ist erkennbar, daß der Aufbau der weiteren Blase 12, in der der weitere Sensorschichtwiderstand R_{T} untergebracht ist, demjeni- gen der Blase 11 weitgehend entspricht. Dem Podest 17 der Blase 11 entspricht das Podest 170 der Blase 12, der Membran 14 die Membran 140, der Schutzschicht 15 die Schutzschicht 150 und der Zwischenschicht 16 die Zwischenschicht 160. Für die Schutzschicht 150 der Blase 12 wird ein Material mit einer sehr guten Wärmeleitfähigkeit verwendet.

Der im folgenden beschriebene Herstellungsprozeß bezieht sich auf die in Figur 3 dargestellte Dickschichtblase 11, in der die beiden Schichtwiderstände R_{H} und R_{S} untergebracht sind. Die Herstellung der weiteren Dickschichtblase 12 mit dem darin untergebrachten weiteren Sensorschichtwiderstand R_{T} erfolgt jedoch in entsprechender Weise.

Der Prozeß beginnt damit, daß auf das Keramiksubstrat 10 an der Stelle, an der die Blase 11 angebracht werden soll, ein aus einer Dickschichtpaste bestehendes Podest 17 aufgedruckt und anschließend getrocknet und in Luft gebrannt wird. Hierauf wird auf das Podest 17 eine in Figur 3 nicht dargestellte Schicht aus Kohlepaste gedruckt, die anschließend getrocknet und in Stickstoff gebrannt wird. Beim Brennen der Kohlepaste in Stickstoff entweichen im wesentlichen nur die flüchtigen Bestandteile, die Kohle bleibt jedoch erhalten. Dann wird auf die Kohleschicht und auf einen sie umgebenden Randbereich eine aus einer keramischen Dickschichtpaste bestehende Schicht aufgedruckt und das System anschließend in Stickstoff und hierauf in Luft gebrannt. Beim Brennen des Systems in Luft brennt die Kohleschicht vollständig aus und die auf die Kohleschicht aufgebrachte Schicht wird zu einer Membran aufgewölbt. Da in diesem Verfahrensstand die Membran noch zu porös und zu dünn ist, wird sie anschließend durch Einlagerung von Glas verstärkt und verdichtet. Auf diese Weise entsteht die Membran 14, wie sie in Figur 3 dargestellt ist.

Auf die Membran 14 wird nun eine Glasschicht 16 aufgedruckt, die als Unterlage für das darauf aufzubringende, die Schichtwiderstände R_{S} und R_{H} enthaltende Schichtsystem dient und die Haftung und die Homogenität dieses Schichtsystems verbessern soll. Bei geeigneter Wahl des Materials für die Membran 14 kann jedoch die Glasschicht 16 auch entfallen.

Zur Herstellung des Sensorschichtwiderstandes R_{S} wird eine platinhaltige Paste verwendet. Dann erfolgt der Druck der Zwischenschicht 13 und hierauf der Druck des Heizschichtwiderstandes R_{H}. Die Zwischenschicht 13 besteht aus einem Glas, das einerseits eine gute thermische Kopplung, andererseits eine gute elektrische Isolierung der beiden Schichten R_{H} und R_{S} gewährleistet. Für den Druck des Heizschichtwiderstandes R_{H} wird vorzugsweise eine Platin-Resinat-Paste verwendet. Statt dessen kann aber auch eine andere Dickschicht-Widerstandspaste verwendet werden.

Anschließend wird die Schutzschicht 15 aufgetragen. Die Schutzschicht 15 schützt die Schichtelemente R_{H} und R_{S} und die in Figur 3 nicht dargestellten Leiterbahnen 18 vor Verschmutzung und Korrosion.

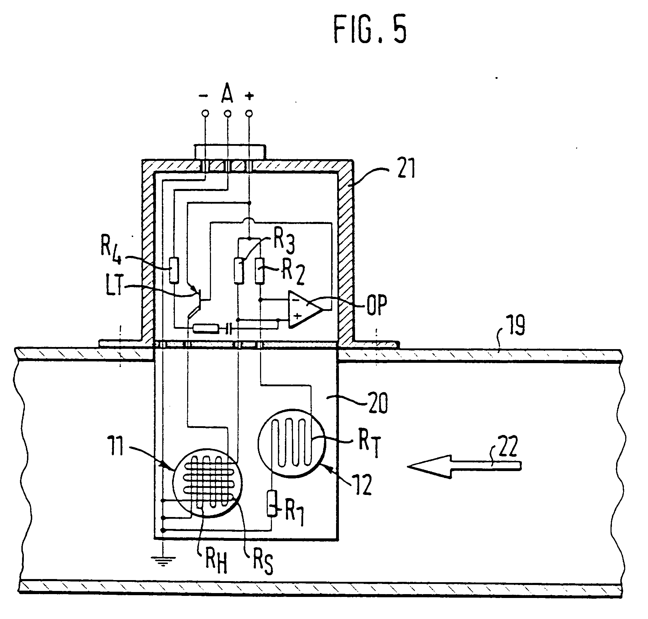

Figur 5 zeigt als Anwendungsbeispiel eines Luftmassendurchflußmessers gemäß der Erfindung eine Ausführung, die zur Messung der angesaugten Luftmenge im Saugrohr eines Kraftfahrzeuges bestimmt ist. Das Saugrohr ist mit 19, das die Widerstände R_{H}, R_{S}, R_{T} und R₁ tragende Sensorelement mit 20 bezeichnet. Die übrigen Schaltungsteile der Meßeinrichtung sind in einem am Saugrohr 19 montierten Gehäuse 21 untergebracht. Die Richtung der strömenden Luftmenge ist durch einen Pfeil 22 angedeutet.

Die Erfindung ist nicht auf die anhand der Zeichnung beschriebenen Ausführungsbeispiele einer Einrichtung zur Messung einer strömenden Luftmenge beschränkt. Es sind vielerlei Abwandlungen denkbar. Auch kann die beschriebene Einrichtung zur Mengenmessung bei anderen strömenden Medien, insbesondere auch bei Flüssigkeiten, verwendet werden.

Darüber hinaus kann der zur Erfassung der Temperatur der strömenden Luftmenge dienende weitere Sensorschichtwiderstand R_{T}, losgelöst von seiner Verwendung als Temperaturfühler in einem Luftmassendurchflußmesser, auch für andere Temperaturmeßaufgaben an festen Körpern, Flüssigkeiten oder Gasen verwendet werden. In diesem Falle entfällt seine Integration mit den Schichtwiderständen R_{H}, R_{S} und R₁ auf dem gemeinsamen Substrat 10.

## Patentansprüche

1. Einrichtung zur Messung einer strömenden Luftmenge, insbesondere der angesaugten Luftmenge im Saugrohr (19) eines Kraftfahrzeugs, mit einem der strömenden Luft ausgesetzten, in Dickschichttechnik ausgeführten Sensorelement (20),
wobei das Sensorelement ein Schichtsystem aufweist, bestehend aus einem stromdurchflossenen Heizschichtwiderstand (R_{H}), einer gut wärmeleitenden aber elektrisch isolierenden Zwischenschicht (13) und einem zur Erfassung der Temperatur des Heizschichtwiderstandes (R_{H}) dienenden Sensorschichtwiderstand (R_{S}), der durch die Zwischenschicht (13) von dem Heizschichtwiderstand (R_{H}) getrennt ist und Bestandteil einer Brückenschaltung ist,
dadurch gekennzeichnet,
- daß auf einem isolierenden Substrat (10) eine aus keramischem Werkstoff, insbesondere aus Glaskeramik, bestehende Blase (11) aufgewölbt ist,
- daß die Blase (11) eine in Dickschichttechnik hergestellte Membran (14) enthält,
- und daß das aus dem Heizschichtwiderstand (R_{H}), der Zwischenschicht (13) und dem Sensorschichtwiderstand (R_{S}) bestehende Schichtsystem auf der dem isolierenden Substrat (10) abgewandten Seite der Membran (14) angeordnet ist.

2. Einrichtung nach Anspruch 1, dadurch gekennzeichnet, daß die Zwischenschicht (13) aus Glas besteht.

3. Einrichtung nach Anspruch 1 oder 2, dadurch gekennzeichnet, daß der zur Erfassung der Temperatur des Heizschichtwiderstandes (R_{H}) dienende Sensorschichtwiderstand (R_{S}) zwischen der zugehörigen Membran (14) und dem Heizschichtwiderstand (R_{H}) liegt.

4. Einrichtung nach Anspruch 1 oder 2, dadurch gekennzeichnet, daß der Heizschichtwiderstand (R_{H}) zwischen der zugehörigen Membran (14) und dem zur Erfassung der Temperatur des Heizschichtwiderstandes (R_{H}) dienenden Sensorschichtwiderstand (R_{S}) liegt.

5. Einrichtung nach einem der vorhergehenden Ansprüche mit einem zur Erfassung der Temperatur der strömenden Luftmenge dienenden, mit dieser in thermischem Kontakt stehenden weiteren Sensorschichtwiderstand (R_{T}), der ebenfalls Bestandteil der Brückenschaltung ist,
dadurch gekennzeichnet,
- daß auf dem isolierenden Substrat (10) eine weitere aus keramischem Werkstoff, insbesondere aus Glaskeramik, bestehende Blase (12) aufgewölbt ist,
- daß die weitere Blase (12) eine in Dickschichttechnik hergestellte weitere Membran (140) enthält
- und daß der weitere Sensorschichtwiderstand (R_{T}) auf der dem isolierenden Substrat (10) abgewandten Seite der weiteren Membran (140) angeordnet ist.

6. Einrichtung nach Anspruch 5, dadurch gekennzeichnet, daß die Membran (14) bzw. die weitere Membran (140) durch Einlagerung von Glas verstärkt ist.

7. Einrichtung nach Anspruch 5 oder 6, dadurch gekennzeichnet, daß das aus dem Heizschichtwiderstand (R_{H}), der Zwischenschicht (13) und dem Sensorschichtwiderstand (R_{S}) bestehende Schichtsystem bzw. der weitere Sensorschichtwiderstand (R_{T}) mit einer Schutzschicht (15 bzw. 150) abgedeckt ist.

8. Einrichtung nach einem der Ansprüche 5 bis 7, dadurch gekennzeichnet, daß das zwischen der Membran (14) und dem aus dem Heizschichtwiderstand (R_{H}), der Zwischenschicht (13) und dem Sensorschichtwiderstand (R_{S}) bestehenden Schichtsystem bzw. zwischen der weiteren Membran (140) und dem weiteren Sensorschichtwiderstand (R_{T}) eine vorzugsweise aus Glas bestehende Zwischenschicht (16 bzw. 160) angeordnet ist.

## Claims

1. Device for measuring a flowing air quantity, in particular the air quantity drawn in in the suction pipe (19) of a motor vehicle, comprising a sensor element (20) which is exposed to the flowing air, is constructed in thick-film technology, the sensor element having a film system consisting of a heating film resistor (R_{H}) through which current flows, an intermediate film (13) which conducts heat readily but is electrically insulating and a sensor film resistor (R_{S}) which serves to sense the temperature of the heating film resistor (R_{H}), is separated from the heating film resistor (R_{H}) by the intermediate film (13) and is a component of a bridge circuit,
characterised
- in that a bubble (11) made of ceramic material, in particular of glass ceramic, is arched on an insulating substrate (10),
- in that the bubble (11) contains a diaphragm (14) produced in thick-film technology,
- and in that the film system consisting of the heating film resistor (R_{H}), the intermediate film (13) and the sensor film resistor (R_{S}) is arranged on the side of the diaphragm (14) which is remote from the insulating substrate (10).

2. Device according to Claim 1, characterised in that the intermediate film (13) is made of glass.

3. Device according to Claim 1 or 2, characterised in that the sensor film resistor (R_{S}) serving to sense the temperature of the heating film resistor (R_{H}) lies between the associated diaphragm (14) and the heating film resistor (R_{H}).

4. Device according to Claim 1 or 2, characterised in that the heating film resistor (R_{H}) lies between the associated diaphragm (14) and the sensor film resistor (R_{S}) serving to sense the temperature of the heating film resistor (R_{H}).

5. Device according to one of the preceding claims having a further sensor film resistor (R_{H}) which serves to sense the temperature of the flowing air quantity, is in thermal contact with the latter and is likewise a component of the bridge circuit, characterised
- in that a further bubble (12) made of ceramic material, in particular of glass ceramic, is arched on the insulating substrate (10),
- in that the further bubble (12) contains a further diaphragm (140) produced in thick-film technology,
- and in that the further sensor film resistor (R_{T}) is arranged on the side of the further diaphragm (140) which is remote from the insulating substrate (10).

6. Device according to Claim 5, characterised in that the diaphragm (14) or the further diaphragm (140) is strengthened by the inclusion of glass.

7. Device according to Claim 5 or 6, characterised in that the film system consisting of the heating film resistor (R_{H}), the intermediate film (13) and the sensor film resistor (R_{S}), or the further sensor film resistor (R_{T}) is covered with a protective film (15 or 150).

8. Device according to any of Claims 5 to 7, characterised in that an intermediate film (16 or 160), preferably made of glass, is arranged between the diaphragm (14) and the film system consisting of the heating film resistor (R_{H}), the intermediate film (13) and the sensor film resistor (R_{S}), or between the further diaphragm (140) and the further sensor film resistor (R_{T}).

## Revendications

1. Dispositif de mesure d'un volume d'air en écoulement, notamment du volume d'air aspiré par la tubulure d'aspiration (19) d'un véhicule automobile, avec un élément de capteur (20) fabriqué en technique des couches épaisses et exposé à l'air qui s'écoule, l'élément de détecteur ayant un système de couche formé d'une résistance chauffante en couche (R_{H}) balayée par le flux, d'une couche intermédiaire (13) ayant de bonnes caractéristiques de conductivité thermique, mais assurant une isolation électrique, ainsi que d'une résistance de détecteur (R_{S}) en couche, servant à détecter la température de la résistance chauffante (R_{H}) en couche, cette résistance de détecteur étant séparée de la résistance chauffante (R_{H}) par une couche intermédiaire (13) et faisant partie d'un circuit en pont, dispositif caractérisé en ce que :
- une poche (11) en une matière céramique, notamment en céramique de verre est formée de façon bombée sur le substrat isolant (10),
- la poche (11) contient une membrane (14) réalisée en technique des couches épaisses,
- le système de couche formé de la résistance chauffante en couche (R_{H}), de la couche intermédiaire (13) et de la résistance de détecteur en couche (R_{S}), est prévu sur la face de la membrane (14) opposée au substrat isolant (10).

2. Dispositif selon la revendication 1, caractérisé en ce que la couche intermédiaire (13) est en verre.

3. Dispositif selon la revendication 1 ou 2, caractérisé en ce que pour détecter la température de la résistance chauffante en couche (R_{H}), on a la résistance de détecteur en couche (R_{S}) entre la membrane correspondante (14) et la résistance chauffante en couche (R_{H}).

4. Dispositif selon la revendication 1 ou 2, caractérisé en ce que la résistance chauffante en couche (R_{H}) est prévue entre la membrane correspondante (14) et la résistance de détecteur en couche (R_{S}) servant à détecter la température de la résistance chauffante (R_{H}).

5. Dispositif selon l'une des revendications précédentes comportant une résistance de détecteur en couche (R_{T}) servant à détecter la température du volume d'air en écoulement et en contact thermique avec celui-ci, cette résistance faisant également partie du montage en pont, caractérisé en ce que :
- sur le substrat isolant (10), on a réalisé une autre poche (12) en une matière céramique, notamment en céramique de verre, obtenue sous forme bombée,
- cette autre poche (12) contient une autre membrane (140) fabriquée en technique des couches épaisses,
- l'autre résistance de détecteur en couche (R_{T}) est prévue sur la face de l'autre membrane (140) opposée au substrat isolant (10).

6. Dispositif selon la revendication 5, caractérisé en ce que la membrane (14) ou l'autre membrane (140) sont renforcées par insertion de verre.

7. Dispositif selon la revendication 5 ou 6, caractérisé en ce que le système de couches formé de la résistance chauffante en couche (R_{H}), de la couche intermédiaire (13) et de la résistance de détecteur en couche (R_{S}) ou encore l'autre résistance de détecteur en couche (R_{T}), est recouvert d'une couche de protection (15, 150).

8. Dispositif selon l'une des revendications 5 à 7, caractérisé en ce que le système de couches compris entre la membrane (14) et la résistance chauffante en couche (R_{H}), la couche intermédiaire (13) et la résistance de détecteur en couche (R_{S}) ou entre l'autre membrane (140) et l'autre résistance de détecteur en couche (R_{T}), comporte une couche intermédiaire (16, 160) qui est de préférence en verre.
